# DEMANDE DE BREVET EUROPEEN

(11) **EP 4 000 403 A1**
(43) Date de publication de la demande: **25.05.2022**
(21) Numéro de dépôt: 21209221.7
(22) Date de dépôt: 19.11.2021
(51) Int. Cl.: A23B 4/00, A23B 4/005, B65B 55/02

(54) **PROCÉDÉ DE FABRICATION D'UN PRODUIT AGROALIMENTAIRE À BASE DE MOLLUSQUES**

(30) Priorité: 20.11.2020 FR 2011927
(71) Demandeur: Lanedri, Badre, 34160 Beaulieu (FR)
(72) Inventeur: Lanedri, Badre, 34160 Beaulieu (FR)
(74) Mandataire: IPAZ

(57) **Abrégé**

La présente demande concerne un procédé de fabrication d'un produit agroalimentaire de longue conservation à base de mollusques associés à leur coquille. Elle concerne aussi un produit agroalimentaire de longue conservation, de type conserve, à base de mollusques associés à leur coquille.

## Description

La présente demande concerne un procédé de fabrication d'un produit agroalimentaire de longue conservation à base de mollusques associés à leur coquille. Elle concerne aussi un produit agroalimentaire de longue conservation, de type conserve, à base de mollusques associés à leur coquille.

Le domaine technique de l'invention est celui de la fabrication de produits agroalimentaires de longue conservation, de type conserve, et en particulier celui de la fabrication de produits agroalimentaires à base de mollusques de la classe des gastéropodes.

La préparation de mollusques associés à leur coquille et associés à une garniture d'accompagnement est inspiré des préparations traditionnelles de ces mollusques, les modes de préparation et les garnitures étant caractéristiques de différentes traditions culinaires. Ces produits, préparés et consommés immédiatement, sont très appréciés, il est néanmoins souhaitable de disposer de produits agroalimentaires de longue conservation à base de mollusques associés à leur coquille et avec des améliorations de recette et des adaptations du processus de préparation et traitement, afin d'avoir un produit de qualité apprécié et faciliter la distribution et la diffusion de ces produits et en permettre une consommation.

On connaît un procédé de préparation d'escargots consistant à prendre des escargots vivants, les ébouillanter dans leur coquille et à les en sortir, puis mettre les chairs d'escargot dans des boîtes de conserve soumises à autoclavage.

Le document FR 2600500 a pour objet une préparation d'escargots associés à du beurre d'escargot, en l'absence de coquille, le beurre entourant complètement l'escargot pour former une unité comestible conservée par surgélation.

Il existe cependant un souhait des consommateurs de disposer d'un produit de bonne qualité gustative et organoleptique, facile à transporter et à conserver, permettant de déguster des recettes variées de mollusques associés à leur coquille, tout en garantissant le respect des règles sanitaires assurant la sécurité du consommateur et la qualité du produit.

L'inventeur a maintenant mis au point un procédé de fabrication d'un produit agroalimentaire de longue conservation, dans lequel les mollusques associés à leur coquille sont contenus dans un récipient adapté, tel une boîte de conserve stérilisée. Ce procédé confère au produit agroalimentaire ainsi obtenu une saveur et une consistance proches, voire identiques, audit produit agroalimentaire lorsqu'il est fraîchement préparé, tout en permettant au consommateur d'être servi plus rapidement et avec un aspect aussi frais que lorsque la préparation est réalisée sur place. Les mollusques conservent un aspect attractif pour le consommateur car ils sont associés à leur coquille, qui elle-même présente le même aspect que lorsqu'elle est fraîche La présence de la coquille autour du mollusque évite que la chair de ce dernier soit désagrégée lors des étapes de préparation, et assure ainsi une fonction de protection efficace lors de la fabrication.

Le procédé selon l'invention permet également le conditionnement d'une préparation de mollusques associés à leur coquille pour pouvoir la transporter et la consommer aisément.

Le procédé selon l'invention permet également de disposer d'un produit agroalimentaire dont la conservation pendant une longue durée est facile et sûre.

Selon un premier objet, la présente demande concerne un procédé de fabrication d'un produit agroalimentaire comprenant au moins un mollusque associé à sa coquille, ledit procédé comprenant les étapes suivantes :
i) fourniture d'une préparation dudit mollusque associé à sa coquille, à l'exception d'une préparation de moules farcies,
ii) remplissage de récipients avec ladite préparation de mollusques associés à leur coquille,
iii) sertissage, capsulage, vissage, scellage, ou clipsage des récipients remplis,
iv) stérilisation ou appertisation desdits récipients par traitement thermique, de préférence dans un stérilisateur ou autoclave.

Un procédé selon l'invention comprend la fourniture d'une préparation de mollusque associé à sa coquille, ladite préparation comprenant de préférence au moins ledit mollusque associé à sa coquille, au moins un ingrédient alimentaire solide, et/ou au moins un ingrédient alimentaire liquide, et de façon particulièrement préférée au moins ledit mollusque associé à sa coquille, au moins un ingrédient alimentaire solide, et au moins un ingrédient alimentaire liquide.

Selon un premier aspect, dans ladite préparation, les ingrédients alimentaires liquide et solide sont ajoutés directement, séparément ou mélangés, dans le récipient destiné à être stérilisé.

Selon un autre aspect, les ingrédients alimentaires liquide et solide sont mélangés (préalablement) afin d'obtenir une garniture de type sauce ou bouillon, qui sera ajoutée dans le récipient destiné à être stérilisé.

Selon l'invention, les mollusques associés à leur coquille peuvent être mélangés ou associés à au moins un ingrédient alimentaire solide et/ou au moins un ingrédient alimentaire liquide, ou enrobés d'une garniture choisie parmi un grand nombre de recettes.

Dans le procédé selon l'invention, par « mollusque associé à sa coquille » on entend de préférence un mollusque physiquement associé à sa propre coquille ou un mollusque isolé de sa coquille puis remis en présence et mélangé à une coquille préalablement détachée, et de préférence un mollusque physiquement associé à sa propre coquille. Dans les deux modes de réalisation, le mollusque utilisé dans l'étape i) est associé à une coquille (sa propre coquille ou une autre coquille qui devient la coquille qui le couvre).

Selon un premier aspect particulier du procédé selon l'invention, dans ladite préparation de mollusque associé à sa coquille, ledit mollusque est vivant.

Selon un autre aspect particulier, dans ladite préparation de mollusque associé à sa coquille, ledit mollusque a subi un traitement thermique, notamment un traitement thermique choisi parmi : la pré-cuisson, la cuisson, la congélation, la surgélation et un de leurs mélanges, tel que par exemple la combinaison d'une pré-cuisson et d'une congélation ou d'une cuisson et d'une congélation.

Dans le procédé selon l'invention, ledit mollusque à coquille est choisi parmi les mollusques suivants : escargot, moule, spisule, amande de mer, bigorneau, bucarde, bulot, coque, coquille Saint-Jacques, couteau, huître, ormeau, palourde, patelle, pétoncle, pouce-pied, praire, telline, et tout mollusque à coquille autorisé à la consommation humaine.

Selon une forme de réalisation préférée de l'invention, ledit mollusque à coquille est choisi parmi les mollusques de la classe des gastéropodes, de façon particulièrement préférée les mollusques de la classe des gastéropodes terrestres, et de façon plus particulièrement préférée les escargots. En effet, le procédé de l'invention est particulièrement adapté à de telles espèces puisqu'il permet de garantir une chair tendre et un maintien de leur saveur ainsi que des ingrédients qui les accompagnent, tels que les plantes aromatiques, tout en garantissant une longue conservation.

Dans le procédé selon l'invention de fabrication d'un produit agroalimentaire, ledit mollusque est de préférence un escargot.

Ledit escargot peut être choisi parmi les espèces et sous-espèces d'escargots autorisés à la consommation humaine suivants : *Helix aspersa aspersa* (petit gris), *Helix aspersa maxima* (gros gris), *Helix aspersa elata, Helix aspersa, Helix aspersa major, Helix pomatia* (escargot de bourgogne), *Helix chocolata delicium, Helix ceratina, Helix lucorum, Otala lactea, Otala punctata, Xerosecta cespitum, Eobania vermiculata, Euparipha, Eobania vermiculata, Cepaea vindobonensis, Achatina fulica* (escargot géant africain), *Helix cincta* (escargot grec), *Helix cincta* (escargot de Vénétie), *Cepaea hortensis* (escargot des jardins), *Cepeae nemoralis* (escargot des bois), *Elona quimperiana* (escargot de Quimper), *Zonites algirius* (escargot peson), *Helix lucorum* (escargot turc), *Tyrrhenaria ceratina* (escargot de Corse).

Selon un aspect particulier de l'invention, la fourniture de la préparation dudit mollusque (étape i)) comprend la fourniture d'au moins un mollusque associé à sa coquille, la fourniture d'au moins un ingrédient alimentaire liquide, et la fourniture d'au moins un ingrédient alimentaire solide (i.e. non liquide).

Dans un procédé selon l'invention, ledit mollusque associé à sa coquille, l'au moins un ingrédient liquide et l'au moins un ingrédient non liquide sont soit mélangés préalablement au remplissage des récipients, soit ajoutés séparément dans les récipients.

Selon un mode de réalisation préféré, les mollusques sont introduits dans les récipients, suivi des ingrédients liquides et/ou solides préalablement mélangés ensemble pour produire un bouillon ou une sauce.

Les récipients utilisés dans le procédé de l'invention résistent au traitement thermique iv) et sont en matériau permettant le contact avec des produits alimentaires de telle sorte qu'ils ne présentent pas de risque sanitaire pour le consommateur.

Dans le procédé selon l'invention, ledit au moins un ingrédient alimentaire liquide est choisi parmi : eau, lait, jus de fruit, jus de légume, et tout autre liquide alimentaire consommable.

Dans le procédé selon l'invention, ledit au moins un ingrédient alimentaire solide est choisi parmi : le sel, le sucre, les plantes aromatiques, les épices, les condiments alimentaires, les agents de conservation et de préparation alimentaire, les fruits, les écorces de fruits, les légumes, les légumineuses, les céréales, les viandes, et tout autre solide alimentaire. Cet ingrédient peut éventuellement être soumis à un traitement thermique.

Dans le procédé selon l'invention, l'étape i) comprend de préférence les sous-étapes suivantes : fourniture d'au moins un mollusque associé à sa coquille, fourniture d'au moins un ingrédient alimentaire solide, fourniture d'au moins un ingrédient alimentaire liquide, pesage des mollusques, des ingrédients alimentaires solide et liquide.

L'ordre des étapes avant le remplissage des récipients peut varier.

L'étape ii) consiste en l'introduction dans un récipient adapté de la préparation de mollusques à coquille obtenue à l'étape i).

L'étape ii) de remplissage comprend de préférence le remplissage des récipients avec les mollusques, le remplissage des récipients avec au moins un ingrédient alimentaire solide, et le remplissage des récipients avec au moins un ingrédient alimentaire liquide.

L'ordre des étapes pendant le remplissage des récipients peut varier.

Les étapes iii) de sertissage, capsulage vissage, scellage, ou clipsage des récipients remplis, et iv) de stérilisation ou appertisation ont ensuite lieu.

L'étape iii) permet la fermeture hermétique des récipients. Elle est effectuée par sertissage, capsulage, vissage, scellage, ou clipsage, et de préférence par sertissage, ou capsulage.

L'étape iv) est une étape qui garantit la longue conservation des mollusques tout en conservant leur saveur. Il s'agit de l'application d'un traitement thermique sur les récipients remplis et fermés hermétiquement de l'étape iii). Elle est une étape de stérilisation ou d'appertisation

On entend par appertisation un procédé incluant un traitement thermique avec un conditionnement étanche (récipients hermétiques) tandis que la stérilisation ne comprend pas nécessairement cette étape de conditionnement étanche et est généralement limitée au traitement thermique en tant que tel.

L'appertisation ou la stérilisation est différente d'une pasteurisation en ce qu'elle met en œuvre des températures suffisantes pour la destruction de la totalité des germes, ce qui n'est pas le cas de la pasteurisation.

Selon un procédé préféré selon l'invention, la préparation de l'étape i) est une préparation d'escargot à coquille comprenant des escargots à coquille et un ou plusieurs des ingrédients suivants : eau, menthe fraiche, bâtons de réglisse, graines de carvi, anis, morceau d'écorce de cannelle, sel, origan, feuilles de laurier, petits piments rouges séchés, écorce de grenadine séchée, écorce fraîche d'orange, écorce fraîche de citron, huille d'olive. Cette recette est communément appelée « Recette délicieuse d'escargot à coquille ». D'autres ingrédients de produits alimentaires peuvent également être ajoutés selon le type de préparation souhaité.

Selon un autre procédé préféré selon l'invention, la préparation de l'étape i) est une préparation d'escargot à coquille comprenant des escargots à coquille et un ou plusieurs des ingrédients suivants : tomates, oignion, ail, herbes (tel que du persil), épices, plantes aromatiques, viandes, sel et poivre. D'autres ingrédients de produits alimentaires peuvent également être ajoutés selon le type de préparation souhaitée.

Dans un mode de réalisation avantageux, l'étape iv) est effectuée selon les sous-étapes suivantes :
a) montée en température de la température ambiante initiale Ti (i.e. allant de 15 à 40°C environ), jusqu'à l'atteinte d'une température de stérilisation Ts, ladite température de stérilisation Ts étant supérieure à 105 °C, de préférence comprise entre 105 °C et 145 °C (bornes comprises), de façon particulièrement préférée entre 105 °C et 125 °C, et plus préférentiellement de l'ordre de 120 °C ; ladite montée étant effectuée pendant une durée comprise entre 1 et 180 minutes (bornes comprises), de préférence entre 10 et 120 minutes (bornes comprises), et de façon particulièrement préférée entre 30 et 60 minutes (bornes comprises) ;
b) application de la température de stérilisation Ts pendant une durée de stérilisation (appelée temps de palier de stérilisation) comprise entre 1 et 800 minutes (bornes comprises), de préférence entre 10 et 60 minutes (bornes comprises), plus préférentiellement 40 minutes (bornes comprises) ; avec une contrepression comprise entre 0 et 4 bar (mesure en pression relative), de préférence entre 1,5 et 2,5 bar, plus préférentiellement de 2 bar ;
c) application d'une température de refroidissement Tf pendant un temps compris entre 1 minutes et 800 minutes (bornes comprises), de préférence entre 5 minutes et 60 minutes (bornes comprises), de façon particulièrement préférée entre 15 minutes et 60 minutes (bornes comprises), et plus préférentiellement 35 minutes, ladite température de refroidissement Tf étant comprise entre 0 °C et 100 °C (bornes comprises), de préférence comprise entre 15 °C et 95 °C (bornes comprises), plus préférentiellement comprise entre 15 °C et 60 °C (bornes comprises).

Lors de l'étape a), la contrepression est de préférence comprise entre 1,5 et 2,5 bar.

Lors de l'étape c), la contrepression est de préférence inférieure à celle des étapes précédentes a), et b), de façon particulièrement préférée comprise entre 0 et 2,5 bar, et de façon plus particulièrement préférée comprise entre 0,1 et 2,0 bar.

Les étapes a) à c), et notamment le réglage du couple temps / température durant les étapes a) à c), permettent d'obtenir des escargots de longue conservation tout en garantissant un maintien de leur saveur.

Les étapes a) à c) sont réalisées de préférence à l'aide d'un autoclave, en particulier d'un autoclave vendu par la société AURIOL sous la dénomination commerciale « Autoclave chauffage électrique Type 50 4/4 AS construction inox » qui est équipé avec un coffret de commande dénommé AUTRONIC III et qui inclut une option de recherche et développement qui consiste en quatre sondes à cœur fournies avec leur accessoires.

Dans la présente invention, la température est mesurée à l'aide d'une ou plusieurs sondes présentes dans l'autoclave.

Le refroidissement peut être effectué à l'aide de vapeur d'eau froide ou d'eau froide.

Au cours de l'étape c), le refroidissement peut se faire par paliers progressifs pour favoriser un refroidissement uniforme et éviter les chocs thermiques, tel que par exemple avec des températures de refroidissement Tf1, Tf2, Tf3, ... qui diminuent progressivement par palier de 5 à 20 min, la différence entre les températures de deux paliers (e.g. entre Tf1 et Tf2, entre Tf2 et Tf3, etc...) pouvant être d'au moins 10°C, de préférence comprise entre 20 et 40°C (bornes comprises).

Lors de l'étape iv), le traitement thermique est effectué de sorte à obtenir une valeur stérilisatrice comprise entre 3 minutes et 100 minutes (bornes comprises), de préférence comprise entre 3 minutes et 50 minutes (bornes comprises), et de façon particulièrement préférée comprise entre 3 minutes et 20 minutes (bornes comprises). Au dessous de 3 minutes, la stabilité du produit alimentaire n'est pas garantie. Au dessus de 100 minutes, le coût de fabrication est trop élevé.

Dans un mode de réalisation particulièrement préféré de l'invention, ledit procédé comprend les étapes suivantes :
- l'introduction dans un récipient adapté de la préparation de mollusques à coquille [en tant qu'étape ii)],
- le sertissage ou capsulage du récipient rempli [en tant qu'étape iii)], puis
- l'application d'un traitement thermique de stérilisation selon le schéma suivant [en tant qu'étape iv)] :
   a') montée en température, jusqu'à l'atteinte d'une température de stérilisation, dite température de « chauffe » ou « cut », pendant une durée comprise entre 1 et 180 minutes, de préférence entre 20 et 60 minutes ;
   b') application d'une température de stérilisation supérieure à 105 °C, de préférence comprise entre 105 °C et 125 °C, plus préférentiellement 120 °C ;
   c') application d'un temps de palier de stérilisation compris entre 1 et 800 minutes, de préférence entre 10 et 60 minutes, plus préférentiellement 40 minutes ; avec une contrepression comprise entre 0 et 4 bar, de préférence entre 1,5 et 2,5 bar, plus préférentiellement de 2 bar ;
   d') application d'une température de refroidissement pendant un temps compris entre 1 minutes et 800 minutes, de préférence entre 15 minutes et 60 minutes, plus préférentiellement 35 minutes, ladite température de refroidissement étant entre 0 °C et 100 °C, de préférence compris entre 15 °C et 95 °C ; plus préférentiellement comprise entre 15 °C et 60 °C, pour une valeur stérilisatrice comprise entre 3 minutes et 100 minutes.

Les étapes b') et c') correspondent à une seule et même étape d'application de la température de stérilisation Ts pendant une durée de stérilisation (appelée temps de palier de stérilisation).

Dans le procédé selon l'invention, les récipients sont choisis parmi : les récipients métalliques tels que les boites de conserves métalliques, les récipients en verre, notamment les bouteilles en verre ou les bocaux en verre, et les sacs stérilisables. De tels récipients peuvent être de toutes formes.

Les récipients utilisés dans le procédé de l'invention ont de préférence une contenance volumétrique supérieure à 50 ml, et de préférence encore supérieure à 100 ml.

Les récipients utilisés dans le procédé de l'invention ont de préférence une contenance volumétrique inférieure ou égale à 25 L.

A l'issu du procédé de l'invention, le produit alimentaire obtenu possède une grande stabilité.

Dans l'invention, on entend par « grande stabilité » un produit qui satisfait à la norme NF V08-401 et/ou la norme NF V08-408.

L'invention a pour second objet un produit agroalimentaire comprenant au moins un mollusque associé à sa coquille, à l'exception d'un produit agroalimentaire comprenant des moules farcies.

Un tel produit alimentaire présente les avantages d'une longue conservation et du maintien d'excellentes proprétés gustatives.

Le produit alimentaire est de préférence sous la forme d'une conserve ou boîte de conserve.

Ledit mollusque associé à sa coquille est tel que défini dans le premier objet de l'invention.

Ledit produit alimentaire est de préférence obtenu selon le procédé tel que défini dans le premier objet de l'invention.

Ledit produit agroalimentaire est servi rapidement et facilement pour leur consommation.

D'autres avantages et caractéristiques de l'invention apparaîtront à l'examen de la description détaillée d'un mode de mise en œuvre nullement limitatif, et d'une figure annexe.

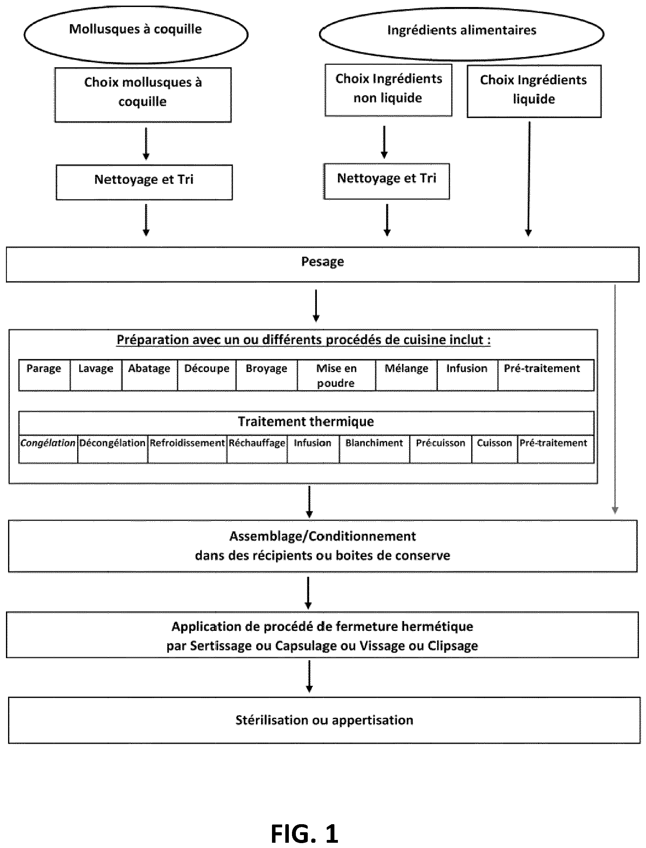

La figure 1 représente schématiquement un mode de réalisation d'un procédé selon l'invention.

La figure 2 représente une photographie d'un produit selon l'invention.

La présente invention se comprendra mieux à la lecture des exemples suivants qui sont donnés pour illustrer l'invention et non pour limiter sa portée.

### EXEMPLE 1 : Procédé de fabrication d'un produit agroalimentaire selon l'invention comprenant des escargots

Une préparation d'escargots est réalisée à partir d'escargots « petit gris » ou d'escargots « gros gris ». Un produit alimentaire tel que défini dans l'invention ou obtenu selon le procédé tel que défini dans l'invention est par exemple une boite de conserve sertie comprenant environ 20 escargots « petit gris » soit 158 g d'escargots coquille comprise, et environ 252 g de bouillon ; ou comprenant environ 12 escargots « gros gris » soit 157 g d'escargots coquille comprise, et environ 260 g de bouillon.

La préparation comprend les ingrédients solides et liquides suivants : eau, menthe fraîche, bâton de réglisse, graine de carvi, écorce de cannelle, sel, origan, feuilles de laurier, petits piments séchés, écorce de grenadine séchée, écorce fraîche d'oranges, écorce fraîche de citron, et huile d'olive.

Le procédé, notamment l'étape i), comprend le pesage des ingrédients de la préparation, le mélange des ingrédients, et la réalisation d'un bouillon par ajout d'eau. Le bouillon peut être réalisé selon différents temps d'infusion, par exemple à 100°C pendant une durée comprise entre 30 minutes et 180 minutes (bornes comprises). Lors de l'étape ii), des boîtes de conserves sont remplies d'escargots préalablement cuits puis congelés, ensuite les escargots sont recouverts du bouillon jusqu'à recouvrement. Les boites de conserves sont fermées par sertissage lors de l'étape iii), puis stérilisées lors de l'étape iv) au moyen d'un palier à 120°C pendant 30 minutes.

Le barème utilisé lors du traitement thermique de l'étape iv) est décrit dans le Tableau 1 suivant.

**TABLEAU 1**

| Etape | Durée (minutes) | Température (°C) | Pression (Bar) |
|---|---|---|---|
| Montée en température | 50 | 120 | 1,8 |
| Stérilisation | 30 | 120 | 1,8 |
| Refroidissement | 10 | 90 | 1,7 |
| | 10 | 50 | 1,3 |
| | 5 | 30 | 0,8 |
| | 10 | 30 | 0,2 |

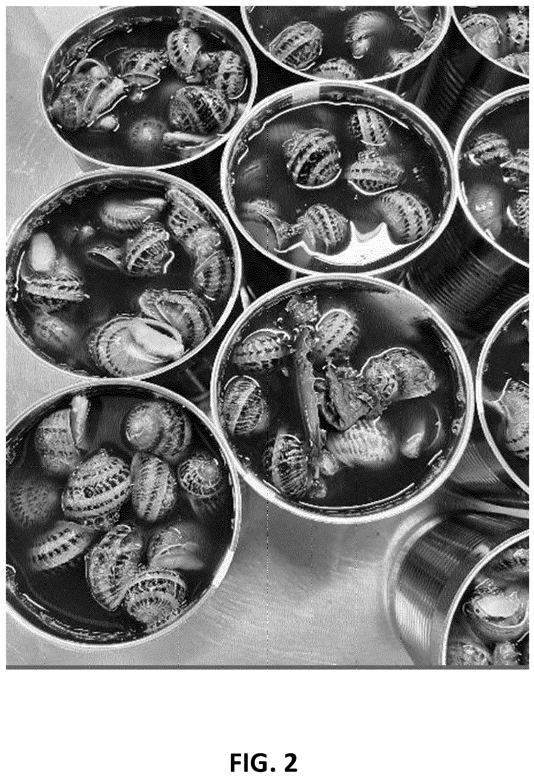

Le produit obtenu est représenté par la figure 2. Son aspect et ses qualités gustatives sont très satisfaisants. Aussi, les résultats d'analyses de contrôle de stabilité du produit obtenu au laboratoire agroalimentaire ont permi de conclure que le produit est stable à l'incubation. Les analyses ont confirmé que le produit est conforme aux régies de l'hygiène des denrées alimentaires et spécifiquement à celles applicables aux denrées alimentaires d'origine animale.

Les résultats ainsi obtenus permettent donc de valider l'intérêt d'un procédé selon l'invention.

### EXEMPLE 2 : Procédé de fabrication d'un produit agroalimentaire selon l'invention comprenant des moules

Un produit est réalisé en réalisant une préparation de moules selon des recettes dites de « Moules marinières », « Moules marinières à la crème « Moules marinières à la crème curry », dans lesquelles la farine est remplacée par de l'amidon modifié.

Des boîtes de conserves sont remplies avec des moules qui sont ensuites recouvertes d'un bouillon en laissant un espace de tête d'au moins un centimètre (275 g de moules pour 350 g de bouillon avec morceaux). Les boites de conserves sont fermées [étape iii)] puis stérilisées [étape iv)] au moyen d'un palier à 118°C pendant 35 minutes.

Le barème utilisé lors du traitement thermique de l'étape iv) est décrit dans le Tableau 2 suivant.

**TABLEAU 2**

| Etape | Durée (minutes) | Température (°C) | Pression (Bar) |
|---|---|---|---|
| Montée en température | 50 | 120 | 1,8 |
| Stérilisation | 23 | 120 | 1,8 |
| Refroidissement | 10 | 90 | 1,7 |
| | 10 | 50 | 1,3 |
| | 5 | 30 | 0,8 |
| | 10 | 30 | 0,2 |

L'aspect et la qualité gustative du produit sont très satisfaisants. Aussi, les résultats d'analyses de contrôle de stabilité du produit obtenu au laboratoire agroalimentaire ont permis de conclure que le produit est stable à l'incubation. Les analyses ont confirmé que le produit est conforme aux régies de l'hygiène des denrés alimentaires et spécifiquement à celles applicables aux denrés alimentaires d'origine animale.

## Revendications

1. Procédé de fabrication d'un produit agroalimentaire comprenant au moins un mollusque associé à sa coquille, ledit procédé comprenant les étapes suivantes :
i) Fourniture d'une préparation dudit mollusque associé à sa coquille, à l'exception d'une préparation de moules farcies,
ii) Remplissage de récipients adaptés à la stérilisation avec ladite préparation de mollusques associés à leur coquille,
iii) Sertissage, capsulage, vissage, scellage ou clipsage des récipients remplis,
iv) Stérilisation ou appertisation desdits récipients, par traitement thermique.

2. Procédé selon la revendication 1, **caractérisée en ce que** dans ladite préparation le mollusque à coquille est vivant ou a subi un traitement thermique, notamment un traitement thermique choisi parmi : la pré-cuisson, la cuisson, la congélation, la surgélation, et un de leurs mélanges.

3. Procédé selon l'une des revendications précédentes, **caractérisé en ce que** ledit mollusque à coquille est choisi parmi les mollusques suivants : escargot, moule, spisule, amande de mer, bigorneau, bucarde, bulot, coque, coquille Saint-Jacques, couteau, huître, ormeau, palourde, patelle, pétoncle, pouce-pied, praire, telline, et tout mollusque à coquille autorisé à la consommation humaine.

4. Procédé selon l'une des revendications précédentes, **caractérisé en ce que** ledit mollusque à coquille est choisi parmi les mollusques de la classe des gastéropodes.

5. Procédé selon l'une des revendications précédentes, **caractérisé en ce que** ledit mollusque à coquille est un escargot.

6. Procédé selon l'une des revendications précédentes, **caractérisé en ce que** ladite préparation de mollusque à coquille comprend :
- au moins un mollusque associé à sa coquille,
- au moins un ingrédient alimentaire liquide, de préférence choisi parmi : eau, lait, jus de fruit, jus de légume et tout autre liquide alimentaire consommable, et
- au moins un ingrédient alimentaire solide, de préférence choisi parmi : le sel, le sucre, les plantes aromatiques, les épices, les condiments alimentaires, les agents de conservation et de préparation alimentaire, les fruits, les écorces de fruits, les légumes, les légumineuses, les céréales, les viandes, et tout autre solide alimentaire.

7. Procédé selon l'une des revendications précédentes, **caractérisé en ce que** la préparation de l'étape i) est une préparation d'escargot à coquille comprenant des escargots à coquille, et un ou plusieurs des ingrédients suivants : eau, menthe fraiche, bâton de réglisse, graines de carvi, anis, morceau d'écorce de cannelle, sel, origan, feuilles de laurier, petits piments rouges séchés, écorce de grenadine séchée, écorce fraiche d'orange, écorce fraiche citron, huile d'olive.

8. Procédé selon l'une des revendications précédentes, **caractérisé en ce que** l'étape iv) est effectuée selon les sous-étapes suivantes :
a) montée en température de la température ambiante initiale Ti allant de 15 à 40°C, jusqu'à l'atteinte d'une température de stérilisation Ts, ladite température de stérilisation Ts étant supérieure à 105 °C ;
ladite montée étant effectuée pendant une durée comprise entre 1 et 180 minutes ;
b) application de la température de stérilisation Ts pendant une durée de stérilisation comprise entre 1 et 800 minutes ; avec une contrepression comprise entre 0 et 4 bar ;
c) application d'une température de refroidissement Tf pendant un temps compris entre 1 minutes et 800 minutes, ladite température de refroidissement Tf étant comprise entre 0 °C et 100 °C.

9. Procédé selon la revendication 8, **caractérisé en ce qu'**au cours de l'étape c), le refroidissement se fait avec des températures de refroidissement Tf1, Tf2, Tf3, ... qui diminuent progressivement par palier de 5 à 20 min, la différence entre les températures de deux paliers étant d'au moins 10°C.

10. Procédé selon l'une des revendications précédentes, **caractérisé en ce que** ledit traitement de la préparation de mollusques par stérilisation comprend :
l'introduction dans un récipient adapté de la préparation de mollusques à coquille,
le sertissage ou capsulage du récipient rempli,
l'application d'un traitement thermique de stérilisation selon le schéma suivant :
a') montée en température jusqu'à l'atteinte d'une température de stérilisation, pendant une durée comprise entre 1 et 180 minutes ;
b') application d'une température de stérilisation supérieure à 105 °C ;
c') application d'un temps de palier de stérilisation compris entre 1 et 800 minutes, avec une contrepression comprise entre 0 et 4 bar ;
d') application d'une température de refroidissement pendant un temps compris entre 1 minutes et 800 minutes ; pour une valeur stérilisatrice comprise entre 3 minutes et 100 minutes.

11. Procédé selon l'une des revendications précédentes, **caractérisé en ce que** les récipients sont choisis parmi : les récipients métalliques, les récipients en verres, et les sacs stérilisables.

12. Produit alimentaire obtenu selon un procédé tel que défini dans les revendications précédentes, comprenant au moins un mollusque associé à sa coquille, à l'exception d'un produit agroalimentaire comprenant des moules farcies.

13. Produit alimentaire obtenu selon un procédé tel que défini dans les revendications précédentes, comprenant au moins un mollusque associé à sa coquille, ledit mollusque étant choisi parmi les mollusques de la classe des gastéropodes.

14. Produit agroalimentaire selon la revendication 11, **caractérisé en ce que** ledit mollusque est un escargot.
